# EUROPÄISCHE PATENTSCHRIFT

(11) **EP 4 185 806 B1**
(45) Veröffentlichungstag und Bekanntmachung des Hinweises auf die Patenterteilung: **09.09.2026**
(21) Anmeldenummer: 21743106.3
(22) Anmeldetag: 07.07.2021
(51) Int. Cl.: G01F 25/20, F22B 1/28, G01F 23/24

(54) **BETREIBEN EINES HAUSHALTS-DAMPFBEHANDLUNGSGERÄTS SOWIE HAUSHALTS-DAMPFBEHANDLUNGSGERÄT**
OPERATING A DOMESTIC STEAM-TREATMENT APPLIANCE, AND DOMESTIC STEAM-TREATMENT APPLIANCE
FONCTONNEMENT D'UN APPAREIL MÉNAGER DE TRAITEMENT À LA VAPEUR AINSI QU'APPAREIL MÉNAGER DE TRAITEMENT À LA VAPEUR

(30) Priorität: 22.07.2020 DE 102020209225
(43) Veröffentlichungstag der Anmeldung: 31.05.2023
(73) Patentinhaber: BSH Hausgeräte GmbH, 81739 München (DE)
(72) Erfinder: LEGO, Dieter, 76137 Karlsruhe (DE); NAGEL, Martin, 67580 Forstheim (FR); TIODONG NONGNI, Gilles Patrick, 76227 Karlsruhe (DE); WAGNER, Benjamin, 75015 Bretten (DE)
(86) Internationale Anmeldenummer: PCT/EP2021/068853
(87) Internationale Veröffentlichungsnummer: WO 2022/017799

(56) Entgegenhaltungen:
- EP-A1- 1 430 823
- EP-A1- 2 755 002
- WO-A2-2009/007456
- DE-A1- 102017 101 078
- DE-A1- 102017 223 855

## Beschreibung

Die Erfindung betrifft ein Verfahren zum Betreiben eines Haushalts-Dampfbehandlungsgeräts, aufweisend einen Verdampfer mit einem heizbaren Wasseraufnahmeraum und einen Füllstandssensor mit zwei übereinander in dem Wasseraufnahmeraum voneinander beabstandet angeordneten Messelektroden, wobei ein Wassererkennungsmesswert dazu vorgesehen ist, eine Benetzung beider Messelektroden mit in den Wasseraufnahmeraum eingefülltem Wasser anzugeben. Die Erfindung betrifft auch ein entsprechendes Haushalts-Dampfbehandlungsgerät mit einer Steuereinrichtung, wobei das Haushalts-Dampfbehandlungsgerät, insbesondere unter Nutzung der Steuereinrichtung, zur Durchführung des Verfahrens ausgebildet ist. Die Erfindung ist besonders vorteilhaft anwendbar auf Dampfgargeräte, insbesondere auf Backöfen und/oder Mikrowellengeräte mit Dampfbehandlungsfunktion.

Bei Füllstandssensoren bzw. Füllstandsmessvorrichtungen der betreffenden Art liegen eine typischerweise obere Messelektrode und eine untere Messelektrode vor, wobei die untere Messelektrode eingefülltes Wasser eher kontaktiert als die obere Messelektrode. Die untere Messelektrode kann bodenseitig in dem Wasseraufnahmeraum angeordnet sein (z.B. auch einen Bereich des Bodens selbst darstellen), während die obere Messelektrode dazu höher an einer Seitenwand des Wasseraufnahmeraums angeordnet ist oder von oben in den Wasseraufnahmeraum ragt. Auch ist es möglich, dass beide Messelektroden von oben in den Wasseraufnahmeraum ragen, wobei die untere Messelektrode weiter hineinragt als die obere Messelektrode, usw.

Zur Füllstandsmessung wird an die beiden Messelektroden eine elektrische Spannung angelegt und der zwischen den Messelektroden fließende elektrische Strom gemessen. Da Flüssigkeit in der Regel einen merklich geringeren spezifischen elektrischen Widerstand bzw. eine höhere elektrische Leitfähigkeit als Luft aufweist, wird durch einen Anstieg der Messwerte des Füllstandssensors über einen vorgegebenen Schwellwert (im Folgenden als "Wassererkennungsmesswert" bezeichnet) erkannt, ob der Füllstand des Wassers in dem Wasseraufnahmeraum die obere Messelektrode erreicht hat und sie damit kontaktiert. Der Wassererkennungsmesswert entspricht also einem Empfindlichkeitsmaß zur Detektion des Erreichens der oberen Messelektrode: liegt der von dem Füllstandssensor gemessene Messwert unterhalb des Wassererkennungsmesswert, wird davon ausgegangen, dass das Wasser nicht bis zu der oberen Messelektrode reicht. Der Wassererkennungsmesswert wird deshalb vorgesehen, weil auch nicht direkt über das eingefüllte Wasser zwischen den beiden Messelektroden fließende Kriechströme auftreten können, die dann fälschlicherweise einen bis zu der oberen Messelektrode mit Wasser gefüllten Wasseraufnahmeraum vorspiegeln würden. Solche Kriechströme können beispielsweise über feuchte Innenwände des Verdampfers fließen, insbesondere falls diese mit einer porösen Kalkschicht belegt sind, in der sich Wasser sammeln kann.

DE 10 2014 203 537 A1 offenbart einen Verdampfer für ein Dampfbehandlungsgerät, insbesondere Haushaltsgerät, der einen Aufnahmeraum für zu verdampfende Flüssigkeit mit einer bodenseitigen Flächenheizung und einer Dampfauslassöffnung und zwei in dem Aufnahmeraum freiliegende elektrische Kontakte für eine Bestimmung eines Füllstands in dem Aufnahmeraum aufweist, wobei die Flächenheizung mindestens eine unbeheizte Zone aufweist und zumindest ein elektrischer Kontakt oberhalb einer unbeheizten Zone angeordnet ist. Ein Dampfbehandlungsgerät, insbesondere Dampfgargerät, weist mindestens einen solchen Verdampfer auf.

WO 2009/007456 A3 offenbart eine Vorrichtung zur Zugabe von Wasser zur Dampferzeugung in einem Gargerät, mit einem Verdampfergefäß, in das Wasser abhängig von dem Füllstand des in dem Verdampfergefäß enthaltenen Wassers zuführbar ist, und Elektroden, mit denen der Füllstand des Wassers im Verdampfergefäß detektierbar ist, wobei eine Innenwand des Verdampfergefäßes zumindest teilweise aus einem elektrisch leitfähigen Material ausgebildet ist und dieser Teil der Innenwand eine erste Elektrode ist.

Jedoch hat es sich gezeigt, dass ein Betrieb eines Verdampfers eines Haushalts-Dampfbehandlungsgeräts abhängig von der Art des eingefüllten Wassers unbefriedigend ablaufen kann.

DE 10 2017 101 078 A1 offenbart eine Erkennvorrichtung zum Erkennen eines Füllstands für eine Dampferzeugungseinrichtung eines Dampfbügelgeräts. Die Erkennvorrichtung umfasst zumindest einen Wasserbehälter, eine Kontakteinrichtung und eine Steuereinrichtung. Der Wasserbehälter ist dazu ausgeformt, um zu verdampfendes Wasser aufzunehmen. Die Kontakteinrichtung ist zumindest teilweise in dem Wasserbehälter angeordnet und weist zumindest eine Elektrode auf, die dazu ausgebildet ist, um ansprechend auf einen Kontakt mit dem in dem Wasserbehälter angeordneten Wasser ein Kontaktsignal auszugeben. Die Steuereinrichtung ist dazu ausgebildet, um ein Nachfüllsignal zu erzeugen, das dazu ausgebildet ist, um die Wasserpumpe unter Verwendung des Kontaktsignals zu betreiben und dazu ausgebildet, um ein Messen einer Leitfähigkeit des Wassers unter Verwendung der Elektrode zu bewirken und ein Fehlersignal auszugeben, wenn die Leitfähigkeit der Leitfähigkeit von demineralisiertem Wasser entspricht.

Es ist die **Aufgabe** der vorliegenden Erfindung, die Nachteile des Standes der Technik zumindest teilweise zu überwinden und insbesondere eine verbesserte Möglichkeit zum Betrieb eines Verdampfers eines Haushalts-Dampfbehandlungsgeräts unter Nutzung unterschiedlicher Arten von Wasser (z.B. Leitungswasser, destilliertes Wasser usw.) bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Verfahren zum Betreiben eines Haushalts-Dampfbehandlungsgeräts, aufweisend einen Verdampfer mit einem heizbaren Wasseraufnahmeraum und einen Füllstandssensor mit zwei übereinander in dem Wasseraufnahmeraum voneinander beabstandet angeordneten Messelektroden, wobei ein Wassererkennungsmesswert, der dazu vorgesehen ist, eine Benetzung beider Messelektroden mit in den Wasseraufnahmeraum eingefülltem Wasser anzugeben, an eine elektrische Leitfähigkeit des in dem Wasseraufnahmeraum befindlichen Wassers angepasst wird.

Dadurch wird der Vorteil erlangt, dass das Erreichen einer bestimmten Füllhöhe des Wassers in dem Wasseraufnahmeraum, welche durch die direkte elektrische Verbindung der beiden Messelektroden über das eingefüllte Wasser bestimmt ist, für einen weiten Bereich einer elektrischen Leitfähigkeit des Wassers zuverlässig detektierbar ist. So kann der Verdampfer auch dann ordnungsgemäß betrieben werden, wenn das Wasser sehr weich ist (z.B. eine Leitfähigkeit von weniger als 50 µS/cm aufweist). Solches sehr weiches Wasser kann beispielsweise destilliertes Wasser, Osmosewasser oder entionisiertes Wasser ("purified water") sein. Das Verfahren ist zudem vorteilhafterweise kostengünstig umsetzbar, da bereits vorhandene Bauteile bekannter Verdampfer mit dem betreffenden Aufbau ohne Änderung weiterverwendet werden können und eine Softwareanpassung einfach umsetzbar ist. Der Verdampfer kann beispielsweise den in DE 10 2014 203 537 A1 beschriebenen Aufbau aufweisen, deren Inhalt vollumfänglich aufgenommen wird.

Das Verfahren beruht auf der Erkenntnis, dass manchmal ein unbefriedigender Betrieb eines Verdampfers dadurch bewirkt wird, dass Wasser mit einer merklich geringeren elektrischen Leitfähigkeit verwendet wird als Wasser mit einer üblicherweise angenommenen Leitfähigkeit ("Standard-Leitfähigkeit", z.B. von aus einer Wasserleitung stammendem Trinkwasser). Diese Standard-Leitfähigkeit kann z.B. ab Werk, durch einen Kundendienst oder durch einen Nutzer eingestellt bzw. ausgewählt worden sein. Denn bei einer merklich geringeren Leitfähigkeit des Wassers als der angenommenen Standard-Leitfähigkeit kann es vorkommen, dass der durch den Füllstandssensor ermittelte (Strom-) Messwert selbst dann kleiner als der auf die Standard-Leitfähigkeit abgestellte Wassererkennungsmesswert ist, wenn das eingefüllte Wasser beide Messelektroden kontaktiert. Dann kann der Fall eintreten, dass das Haushalts-Dampfbehandlungsgerät fälschlicherweise keine ausreichende Füllung des Wasseraufnahmeraums erkennt. Folglich wird das Haushalts-Dampfbehandlungsgerät den Verdampfer nicht ordnungsgemäß betreiben. Dieses Problem wird durch die Anpassung des Wassererkennungsmesswerts an die elektrische Leitfähigkeit des eingefüllten Wassers vermieden.

Das Dampfbehandlungsgerät kann ein Dampfgargerät sein. Das Dampfgargerät kann ein eigenständiges Gerät oder ein Kombinationsgerät sein, z.B. ein Backofen und/oder ein Mikrowellenofen mit einer Dampfbehandlungsfunktionalität.

Der Verdampfer kann ein außerhalb eines mit zu bedampfendem Gut beschickbaren Behandlungsraums angeordneter Verdampfer sein. Er kann aber auch innerhalb des Behandlungsraum angeordnet sein, beispielsweise in einer Seitenwand eingehängt sein.

Der Behandlungsraum kann ein Garraum zur Behandlung von Gargut sein. Für den Fall eines Ofens kann der Garraum auch als Ofenraum bezeichnet werden. Durch Aktivieren einer dem Verdampfer zugeordneten Heizung (z.B. mit einer Leistung von bis zu 1200 W) lässt sich das in dem Wasseraufnahmeraum befindliche Wasser erhitzen, insbesondere bis zum Sieden. Das verdampfte Wasser ist über eine Dampfzuführung in den Behandlungsraum leitbar. Zur Temperatureinstellung bzw. -regelung kann dem Verdampfer ein Temperatursensor zum Bestimmen einer Temperatur des Wassers in dem Wasseraufnahmeraum zugeordnet sein.

Während eines Dampferzeugungsbetriebs (z.B. zum Dampfgaren) kann der Verdampfer beispielsweise so betrieben werden, dass dann, wenn der durch den Füllstandssensor bestimmte oder gemessene Messwert unterhalb des Wassererkennungsmesswerts liegt, Wasser in den Wasseraufnahmeraum nachgefüllt wird, bis der Wassererkennungsmesswerts wieder erreicht oder überschritten wird, ggf. zuzüglich eines bestimmten Zusatzvolumens, das sich z.B. durch eine verzögerte Ausschaltung einer Pumpe ergibt.

Der Wasseraufnahmeraum des Verdampfers ist vorteilhafterweise über einen in dem Haushalts-Dampfbehandlungsgerät anordenbaren Wassertank mit Wasser befüllbar. Die Befüllung kann z.B. durch Aktivieren einer Pumpe oder durch Öffnen eines Ventils und folgendes schwerkraftbedingtes Fließenlassen des Wassers aus dem Tank durchgeführt werden. Der Wassertank kann entnehmbar oder fest in dem Gerät installiert sein. Der Wassertank ist in einer Variante durch einen Nutzer füllbar, insbesondere falls er entnehmbar ist. In einer anderen - insbesondere für nicht entnehmbare Wassertanks vorteilhaften - Variante ist der Wassertank automatisch befüllbar, z.B. über einen Frischwasseranschluss. Das Fassungsvermögen des Wassertanks ist typischerweise um ein Mehrfaches höher als das Fassungsvermögen des Wasseraufnahmeraums.

Der Füllstandssensor ist insbesondere mit einer Steuereinrichtung des Haushalts-Dampfbehandlungsgeräts verbunden, über welche auch ein Befüllen des Wasseraufnahmeraums steuerbar ist. Das von dem Füllstandssensor aufgenommene Messsignal kann digitalisiert werden oder sein und dann als (digitaler) Messwert in entsprechenden Einheiten oder "Digits" vorliegen. Der Messwert korreliert mit dem zwischen den Messelektroden fließenden Strom, insbesondere proportional. Beispielsweise können die Messwerte so ausgebildet sein, dass eine Einheit ca. 1 mA entspricht.

Dass der Wassererkennungsmesswert an eine elektrische Leitfähigkeit des in dem Wasseraufnahmeraum befindlichen Wassers angepasst wird, umfasst, dass dies ohne Zwischenschaltung einer Nutzerhandlung bzw. automatisch durchführbar ist.

Die elektrische Leitfähigkeit für sehr weiches Wasser (z.B. vollentsalztes Wasser, Osmosewasser, entionisiertes Wasser, destilliertes Wasser, usw.) liegt häufig zwischen 1 µS/cm und 100 µS/cm und für normales Trinkwasser gemäß Trinkwasserverordnung im gesamten Härtebereich zwischen 100 µS/cm und 2500 µS/cm (temperaturabhängig). Insbesondere falls die elektrische Leitfähigkeit kleiner als 50 µS/cm ist, können sich bei Einstellung des Wassererkennungsmesswerts auf Trinkwasser gemäß der Trinkwasserverordnung Probleme beim Betrieb des Verdampfers ergeben, da ein Kontakt beider Messelektroden durch das eingefüllte Wasser ggf. nicht sicher erkannt wird.

Wird beispielsweise zur Verwendung mit Wasser gemäß Trinkwasserverordnung der Wassererkennungsmesswert auf 450 Messeinheiten oder "Digits" (z.B. entsprechend einem bestimmten elektrischen Strom) festgelegt, können Kriechströme über andere Wasserpfade als dem eingefüllten Wasser (z.B. über feuchte Innenwände) zuverlässig ausgeschlossen werden, da die Kriechströme in der Praxis keine 450 Messeinheiten erreichen. Wird nun der Wasseraufnahmeraum anstelle des Wassers gemäß Trinkwasserverordnung mit sehr weichem Wasser mit einer elektrischen Leitfähigkeit von z.B. weniger als 50 µS/cm befüllt (z.B., weil ein Nutzer den Wassertank mit destilliertem Wasser gefüllt hat, ohne die Werkseinstellungen anzupassen), kann es vorkommen, dass der Stromfluss zwischen den beiden Messelektroden auch bei deren Immersion in dem eingefüllten Wasser den voreingestellten Wassererkennungsmesswert von 450 Messeinheiten nicht erreicht. Die Gerätelogik nimmt dann an, dass das Wasser die zugehörige Füllhöhe noch nicht erreicht hat, obwohl dies tatsächlich der Fall ist.

Das erfindungsgemäße Verfahren sieht vor, dass während eines Anpassungsablaufs zum Anpassen des Wassererkennungsmesswerts an die elektrische Leitfähigkeit des in dem Wasseraufnahmeraum befindlichen Wassers
(a) der Wassererkennungsmesswert auf einen vorgegebenen Mindestwert eingestellt wird,
(b) der Wasseraufnahmeraum mit Wasser befüllt wird, bis der Mindestwert erreicht oder überschritten ist,
(c) das Wasser in dem Wasseraufnahmeraum zum Sieden gebracht wird,
(d) mittels des Füllstandssensors mindestens ein zugehöriger Messwert bestimmt wird;
(e) der Wassererkennungsmesswert anhand des in Schritt (d) bestimmten mindestens einen Messwerts angepasst wird.

Diese Vorgehensweise ergibt den Vorteil, dass sie zuverlässig einen an weite Bereiche der Leitfähigkeit anpassbaren Wassererkennungsmesswert ergibt, der ohne konkrete Berechnung der elektrischen Leitfähigkeit des Wassers und ohne Kenntnis der elektrischen Leitfähigkeit auskommt.

Der Anpassungsablauf kann automatisch durchgeführt werden. Er kann selbsttätig durch das Gerät, durch einen Nutzer oder durch einen Servicetechniker ausgelöst werden.

Der in Schritt (a) eingestellte Mindestwert ist so bemessen, dass - insbesondere unter Annahme keiner oder nur geringer Kriechströme - das Benetzen beider Messelektroden in Schritt (b) auch für sehr weiches Wasser (z.B. mit einer Leifähigkeit zwischen 1 µS/cm und 100 µS/cm, insbesondere zwischen 1 µS/cm und 50 µS/cm) erkannt wird. Das eingefüllte Wasser ist typischerweise kaltes Wasser, z.B. mit einer Temperatur im Bereich der Raumtemperatur (25 °C) oder geringer. Der Mindestwert liegt insbesondere höher als null, z.B. bei 40 Messeinheiten bzw. Digits.

Der Mindestwert kann so gering sein, dass während eines Dampferzeugungsbetriebs typischerweise auftretende Kriechströme höhere Messwerte erzeugen. Es ist daher eine Ausgestaltung, dass Schritt (b) bei trockenem Verdampfer durchgeführt wird. Dies kann z.B. dann der Fall sein, wenn der Verdampfer für eine ausreichend lange Zeitdauer (z.B. mindestens einen Tag) nicht betrieben worden ist.

Durch das Erhitzen des Wassers in Schritt (c) bis zumindest ungefähr zum Siedepunkt (z.B. auf eine Temperatur zwischen 95°C und 100°C) wird vorteilhafterweise sichergestellt, dass die elektrische Leitfähigkeit des Wassers im gleichen Temperaturbereich liegt wie bei einem üblichen Dampferzeugungsbetriebs. Dies beruht auf der Überlegung, dass die elektrische Leitfähigkeit von Wasser stark temperaturabhängig ist. So steigt sie typischerweise um ca. 2 % pro 1 °C Temperaturerhöhung. Die Siedetemperatur lässt sich zudem im Vergleich zu niedrigeren Temperaturen vorteilhafterweise besonders zuverlässig erreichen, und zwar auch ohne Nutzung eines Temperatursensors. Das Wasser kann beispielsweise zeitgesteuert (z.B. für 45 s) oder temperaturgesteuert (z.B. bei Vorhandensein eines Temperatursensors) erfolgen. Jedoch kann allgemein auch eine andere erhöhte Temperatur als die Siedetemperatur eingestellt werden, insbesondere falls diese einregelbar ist.

Dass in Schritt (d) mindestens ein zugehöriger Messwert bestimmt wird, umfasst, dass ein oder mehrere Messwerte bei heißem Wasser aufgenommen werden. Es ist eine Weiterbildung, dass ein Messwert anhand einer Reihe innerhalb einer vorgegebenen Messdauer (z.B. zwischen fünf und zehn Sekunden) aufgenommener Einzel-Messwerte bestimmt oder ermittelt wird, insbesondere als Durchschnittswert. Dies ergibt den Vorteil, dass der Messwert besonders zuverlässig bestimmbar ist, da z.B. durch eine Bewegung der Oberfläche bewirkte Schwankungen der Einzel-Messwerte unterdrückt werden.

Der in Schritt (d) bestimmte Messwert kann einem tatsächlichen Füllstand entsprechen, der - insbesondere bei sehr weichem Wasser - merklich höher liegt als die Position des unteren Endes ("Höhe") der oberen Messelektrode. Je höher die Leitfähigkeit des Wassers ist, desto besser stimmt der Messwert mit der Höhe der oberen Messelektrode überein.

Die Anpassung in Schritt (e) umfasst, dass überprüft wird, welches ein zu dem in Schritt (d) bestimmten Messwert passender Wassererkennungsmesswert ist. Entspricht der so ermittelte Wassererkennungsmesswert nicht dem Mindestwert, wird der ermittelte Wassererkennungsmesswert als neuer Wassererkennungsmesswert eingestellt oder übernommen. Der Wassererkennungsmesswert ist vorteilhafterweise geringer als der in Schritt (d) bestimmte Messwert.

Es ist eine Ausgestaltung, dass in Schritt (e) der Wassererkennungsmesswert über eine Formel oder eine Kennlinie, welche eine Beziehung zwischen dem in Schritt (d) bestimmten Messwert und dem Wassererkennungsmesswert bereitstellt, angepasst wird. So kann der Wassererkennungsmesswert mit dem Messwert als Eingangsgröße besonders feingradig eingestellt werden. Die Formel, deren Parameter sowie die Daten der Kennlinie (bzw. Tabelle) können zuvor experimentell bestimmt worden sein, z.B. von einem Hersteller des Haushalts-Dampfbehandlungsgeräts. Die Formel kann beispielsweise eine vorgegebene Differenz zu dem in Schritt (d) bestimmten Messwert darstellen oder einen vorgegebenen Bruchteil des in Schritt (d) bestimmten Messwerts darstellen.

Es ist eine Ausgestaltung, dass in Schritt (e) der Wassererkennungsmesswert auf einen ersten, höheren Wert festgelegt wird, wenn der in Schritt (d) bestimmte Messwert einen vorgegebenen Schwellwert überschreitet, ansonsten auf einen zweiten, niedrigeren Wert festgelegt wird. Es wird also überprüft, ob nach Erkennen von Wasser in dem Wasseraufnahmeraum der zugehörige Messwert eher niedrig ist (unterhalb des vorgegebenen Schwellwerts liegt, z.B. wenn sehr weiches Wasser eingefüllt wurde) oder eher hoch ist (oberhalb des vorgegebenen Schwellwerts liegt, z.B. wenn Wasser gemäß Trinkwasserverordnung eingefüllt wurde). Abhängig davon wird der Wassererkennungsmesswert auf einen niedrigeren (z.B. für sehr weiches Wasser geeigneten) Wert oder auf einen höheren (z.B. für Wasser gemäß Trinkwasserverordnung geeigneten) Wert eingestellt. Diese beiden Wassererkennungsmesswerte können fest vorgegeben sein. Es ist jedoch grundsätzlich auch möglich, anstelle dieser zwei Kategorien oder Werte noch mehr als zwei Kategorien zu verwenden, z.B. unter Nutzung zweier Schwellwerte und entsprechender Einstellung eines niedrigen, eines mittleren und eines hohen Wassererkennungsmesswerts, usw. Dieser mindestens eine Schwellwert kann auch als "Härtegrenze" bezeichnet werden.

Es ist eine Ausgestaltung, dass nach Schritt (d) und vor Schritt (e) die folgenden Schritte durchgeführt werden:
(d2) Wasser wird aus dem Wasseraufnahmeraum entfernt, bis mittels des Füllstandssensors ein vorgegebener Bruchteil A des in Schritt (d) bestimmten Messwerts unterschritten wird;
(d3) dann wird mittels des Füllstandssensors ein zugehöriger weiterer Messwert bestimmt;
und der Wassererkennungsmesswert wird in Schritt (e) auf einen Wert zwischen dem in Schritt (d) gemessenen Messwert und dem in Schritt (d3) gemessenen weiteren Messwert eingestellt. So wird der Vorteil erreicht, dass der Wassererkennungsmesswert auch ohne Kennlinie oder komplexe Formel berechenbar ist. Der in Schritt (d) bestimmte Messwert kann auch als "oberer Messwert" und der in Schritt (d3) bestimmte weitere Messwert auch als "unterer Messwert" bezeichnet werden. Bei dieser Ausgestaltung wird ausgenutzt, dass der durch den Füllstandssensor gemessene Messwert bei Entfernen (z.B. Abpumpen oder Ablaufenlassen) des Wassers aus dem Wasseraufnahmeraum vergleichsweise plötzlich absinkt, wenn die Elektroden nicht mehr über das Wasser in elektrischem Kontakt stehen. Der Bruchteil A ist grundsätzlich beliebig wählbar, jedoch vorteilhafterweise so bemessen, dass der untere Messwert typischerweise eine Situation wiedergibt, in der die beiden Messelektroden sicher nicht mehr miteinander über das eingefüllte Wasser in elektrischer Verbindung stehen, aber sich noch ein größeres Wasservolumen in dem Wasseraufnahmeraum befindet. Der untere Messwert gibt daher zumindest ungefähr den während eines Dampferzeugungsbetriebs vorliegenden Kriechstrom wieder. Der untere Messwert bzw. der Kriechstrom kann merklich unter dem mit dem mit dem Bruchteil A multiplizierten oberen Messwert liegen.

Der vorgegebene Faktor oder Bruchteil A liegt vorteilhafterweise in einem Bereich [0,1; 0,5], insbesondere [0,1; 0,3], insbesondere [0,25; 0,15], z.B. bei ca. 0,2.

In Schritt (d2) kann der zugehörige untere Messwert analog zu dem oberen Messwert bestimmt werden, z.B. als Durchschnittswert einer über einen vorgegebenen Zeitraum (z.B. zwischen fünf und zehn Sekunden) aufgenommenen Messfolge.

Der Wassererkennungsmesswert x_thr kann in Schritt (e) beispielsweise auf einen Wert $x _ thr = \left(x_o-x_u\right) * B + x _ u$ oder $x _ thr = x _ o - \left(x_o-x_u\right) * B$ eingestellt werden, wobei x_o den oberen Messwert darstellt, x_u den unteren Messwert darstellt und B einen geeignet wählbaren Faktor, insbesondere aus dem Wertebereich ]0; 1[, darstellt. Als besonders geeignet haben sich Werte von B aus dem Wertebereich [0,4; 0,6], speziell von 0,5, herausgestellt.

Anhand des unteren Messwerts (oder eines beliebigen anderen Messwerts, der praktisch nur einen Kriechstrom misst) kann auch ein Rückschluss auf den Verschmutzungs-, insbesondere Verkalkungsgrad gezogen werden: je höher der zu einem Kriechstrom gehörige Messwert ist, desto höher ist tendenziell auch die Verschmutzung, insbesondere Verkalkung des Verdampfers. Es ist eine Weiterbildung, dass mindestens eine eine Entkalkung betreffende Aktion ausgelöst wird, wenn der zu einem Kriechstrom gehörige Messwert einen vorgegebenen Schwellwert überschreitet. Die Aktion kann z.B. eine Ausgabe an einen Nutzer, einen Entkalkungsvorgang auszulösen, und/oder eine automatische Durchführung eines Entkalkungsvorgangs umfassen. Der Schwellwert (auch als "Verkalkungserkennungsschwellwert" bezeichenbar) kann z.B. fest vorgegeben sein oder auf Basis eines nach einem Entkalkungsvorgang entsprechend bestimmten Werts bestimmt werden, beispielsweise als feste oder prozentuale Wertedifferenz zu einem nach einem Entkalkungsvorgang bestimmten Werts. Der Verkalkungserkennungsschwellwert kann aber auch anderweitig aus Historiendaten bestimmt werden.

Das oben beschriebene Verfahren wird vorteilhafterweise zu einem Zeitpunkt durchgeführt, an dem der Verdampfer noch nicht oder nicht mehr verschmutzt, insbesondere verkalkt ist. (Neuzustand/ bzw. nach einem Entkalkungsprozess mit ausreichender Spülung). Das Verfahren kann mit Eintreten bestimmter Ereignisse wiederholt werden, z.B. nach Änderung einer Wasserhärte, nach einem "Pumpentimeout", ausgelöst durch einen Kundendienst, zeitgesteuert (z.B. alle drei Monate) und/oder nach Zurücksetzen auf Werkseinstellung. So stellt z.B. der Pumpentimeout einen Fehler dar, bei dem festgestellt wird, dass die Pumpe zu lange läuft, um den Wasseraufnahmeraum mit Wasser zu füllen. Dies kann beispielsweise auftreten, wenn ohne Anpassung des Wassererkennungsmesswerts sehr weiches Wasser in den Wasseraufnahmeraum eingefüllt wird: das Wasser wird dann nämlich nicht oder nicht in ausreichendem Maß erkannt, und die Pumpe bleibt aktiviert, obwohl beide Elektroden bereits von ihm benetzt sind.

Es ist eine Ausgestaltung, dass dann, wenn der in Schritt (d) bestimmte Messwert einen vorgegebenen Schwellwert überschreitet, ein Vorhandensein von Entkalkungsmittel festgestellt wird. Dabei wird ausgenutzt, dass Entkalkungsmittel die elektrische Leitfähigkeit merklich erhöht. Es wird geschlossen, dass ein Messwert oberhalb des Schwellwerts (auch als "Entkalkungsschwellwert" bezeichenbar) wahrscheinlich durch in dem Wasser vorhandenes Entkalkungsmittel verursacht worden ist. Der Entkalkungsschwellwert kann z.B. bei 2000 µS/cm oder höher liegen, da die elektrische Leitfähigkeit bei Vorhandensein von Entkalkungsmittel typischerweise in einem Bereich zwischen 2000 µS/cm und 50.000 µS/cm liegt.

Es ist eine Ausgestaltung, dass der vorgegebene (Entkalkungs-) Schwellwert während eines eigenständigen Entkalkungsablaufs bestimmt wird und dann, wenn das Vorhandensein von Entkalkungsmittel festgestellt wird, mindestens ein Spülvorgang zum Spülen des Wasseraufnahmeraums durchgeführt wird, insbesondere mit Klarwasser (ohne Entkalkungsmittel).

Die Aufgabe wird ferner gelöst durch ein Haushalts-Dampfbehandlungsgerät, aufweisend einen Verdampfer mit einem heizbaren Wasseraufnahmeraum und einen Füllstandssensor mit mindestens zwei übereinander in dem Wasseraufnahmeraum voneinander beabstandet angeordneten Messelektroden, wobei die Steuereinrichtung zur Durchführung des Verfahrens wie oben beschrieben ausgebildet ist. Das Haushalts-Dampfbehandlungsgerät kann analog zu dem Verfahren ausgebildet werden, und umgekehrt, und weist die gleichen Vorteile auf.

So ist es eine Ausgestaltung, dass Haushalts-Dampfbehandlungsgerät ein Dampfgargerät ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Haushalts-Dampfbehandlungsgeräts;
- Fig.2: zeigt eine Auftragung eines durch einen Füllstandssensor abgefühlten Messwerts x gegen die Zeit t für einen möglichen Anpassungsablauf; und
- Fig.3: zeigt einen möglichen Ablauf eines Verfahrens zum Anpassen eines Wassererkennungsmesswerts.

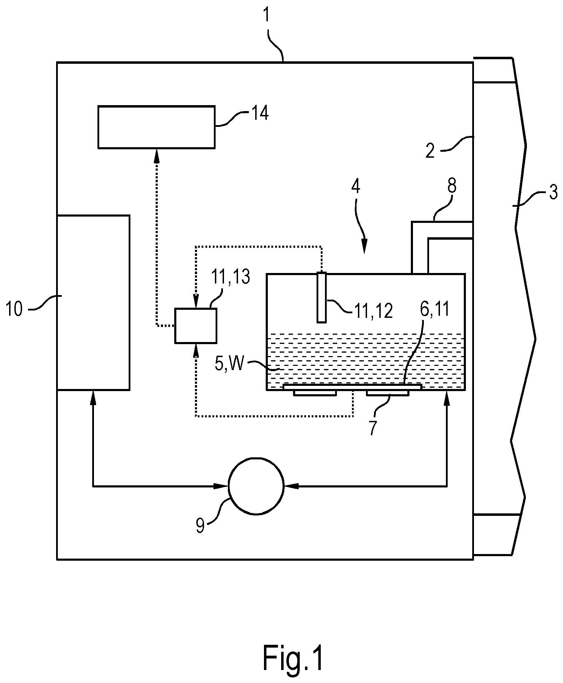

**Fig.1** zeigt als Schnittdarstellung in Seitenansicht eine Skizze eines Haushalts-Dampfbehandlungsgeräts in Form eines Backofens 1 mit Dampfbehandlungsfunktion. Der Backofen 1 weist einen durch einen Garraumwandung 2 begrenzten Garraum 3 auf. Außerhalb des Garraums 3 ist ein Verdampfer 4 mit einem Wasseraufnahmeraum 5 vorhanden. Der Wasseraufnahmeraum 5 weist bodenseitig eine Metallplatte 6 auf, die mittels einer elektrischen Heizung 7 aufheizbar ist. Mittels der Metallplatte 6 lässt sich in dem Wasseraufnahmeraum 5 befindliches Wasser W aufheizen, insbesondere bis zum Sieden. Der dabei entstehende Wasserdampf gelangt über eine Dampfzuführung 8 in den Garraum 3.

Das Wasser W lässt sich mittels einer Pumpe 9 bodenseitig in den Wasseraufnahmeraum 5 einfüllen, und zwar aus einem z.B. entnehmbaren Wassertank 10. Das Fassungsvermögen des Wassertanks 10 ist typischerweise um ein Mehrfaches höher als das Fassungsvermögen des Wasseraufnahmeraums 5. Die Pumpe 9 kann auch so betrieben werden, dass mittels ihr Wasser W aus dem Wasseraufnahmeraum 5 in den Wassertank 10 zurückpumpbar ist.

Der Verdampfer 4 weist ferner einen Füllstandssensor 11 auf bzw. ist dem Verdampfer 4 ein Füllstandssensor 11 zugeordnet. Der Füllstandssensor 11 weist die Metallplatte 6 als untere Messelektrode und eine von oben in den Wasseraufnahmeraum ragende obere Messelektrode 12 auf, die beide mit einer Auswerteschaltung 13 verbunden sind. An die Metallplatte 6 und die obere Messelektrode 12 wird eine Spannung angelegt. Die Auswerteschaltung 13 ist mit einer Steuereinrichtung 14 verbunden, die auch den Betrieb der Pumpe 10 und der Heizung 7 steuern kann.. In einer Variante kann die Auswerteschaltung 13 in die Steuereinrichtung 14 integriert sein, die Steuereinrichtung 14 also die Funktion der Auswerteschaltung übernehmen.

Bei Einfüllen des Wassers W in den Wasseraufnahmeraum 5 wird zunächst die Metallplatte 6 mit Wasser W bedeckt. Mit steigendem Füllstand kommt das Wasser W auch in Kontakt mit der oberen Messelektrode 12, wodurch sich der zwischen den Messelektroden 6, 12 fließende Strom sprunghaft erhöht. Bei trockenem Verdampfer 4 treten meist keine oder nur geringe parasitäre Kriechströme über feuchte Innenwände des Verdampfers 4 auf. Ist der Verdampfer 4, z.B. aufgrund eines aktuell ablaufenden Dampferzeugungsbetriebs, jedoch feucht, können diese Kriechströme merklich groß werden. Um den Einfluss der Kriechströme zu vermeiden, wird daher in der Auswerteschaltung 13 vorteilhafterweise ein Wassererkennungsmesswert eingestellt oder festgelegt, der größer als null und der größer als ein aufgrund der Kriechströme erzeugter Messwert, aber kleiner als ein aufgrund einer Kontaktierung durch das eingefüllte Wasser W erzeugter Messwert ist.

Dies funktioniert so lange gut, wie der Wassererkennungsmesswert auf die elektrische Leitfähigkeit des eingefüllten Wassers W abgestimmt ist. Wird jedoch sehr weiches Wasser (z.B. mit einer elektrischen Leitfähigkeit von weniger als 50 µS/cm) in den Wassertank 10 eingefüllt, obwohl der Wassererkennungsmesswert auf härteres Wasser (z.B. mit einer elektrischen Leitfähigkeit von 100 µS/cm oder mehr) abgestellt ist, kann es vorkommen, dass der Wassererkennungsmesswert erst spät oder sogar gar nicht erreicht wird, obwohl die obere Messelektrode 12 bereits merklich in das eingefüllte Wasser W eintaucht.

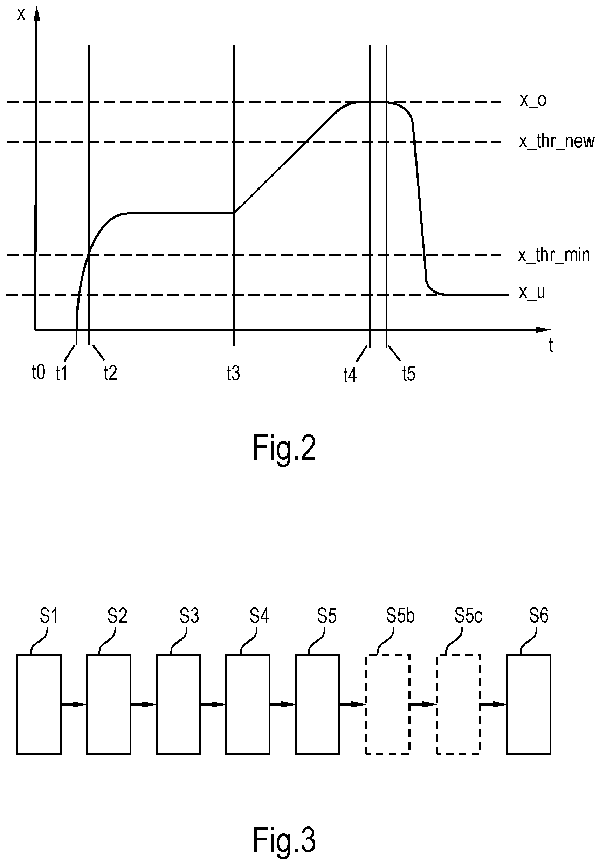

Fig.2 zeigt eine Auftragung eines durch den Füllstandssensor 11 abgefühlten Messwerts x (entsprechend einem zwischen den Messelektroden 6 und 12 fließenden Stroms) gegen die Zeit t für einen möglichen Anpassungsablauf.

Dabei wird zunächst, wie auch in Fig.3 näher beschrieben, in einem Schritt S1 zunächst ein Wassererkennungsmesswert x_thr auf seinen Mindestwert x_thr_min eingestellt. Der Mindestwert x_thr_min ist z.B. so gewählt, dass eine direkte Kontaktierung der Messelektroden 6, 12 durch Wasser W mit einer elektrischen Leitfähigkeit zwischen 1 µS/cm und 50 µS/cm zuverlässig erkannt wird.

In einem Schritt S2 wird ab einem Zeitpunkt t0 über die Pumpe 9 kaltes Wasser W aus dem Wassertank 10 in den Wasseraufnahmeraum 5 gepumpt, wobei ab einem Zeitpunkt t1 die Anwesenheit des Wassers W zwischen den Messelektroden 6, 12 in einem sprunghaften Anstieg der Messwerte x bewirkt.

Die Pumpe 9 wird betrieben, bis die von dem Füllstandssensor 11 abgefühlten Messwerte x bei einem Zeitpunkt t2 den Mindestwert x_thr_min erreichen oder überschreiten, und dann in einem Schritt S3 abgeschaltet. Aufgrund eines kurzen Nachlaufs der Pumpe 9 wird dabei auch nach Erreichen des Mindestwerts x_thr_min noch etwas Wasser W eingepumpt, wodurch der Messwert x noch leicht ansteigt. Der Nachlauf kann auch gezielt eingestellt werden.

Die Schritte S1 bis S3 werden vorzugsweise bei trockenem Verdampfer 4 durchgeführt, da so Kriechströme über z.B. nasse, ggf. kalkbelegte Innenwände vermieden werden.

In einem Schritt S4 wird ab einem Zeitpunkt t3 das Wasser W durch Einschalten der Heizung 7 zum Sieden gebracht, wodurch sich die elektrische Leitfähigkeit des Wassers W und damit auch die Messwerte x zumindest ungefähr proportional erhöhen.

Zu einem Zeitpunkt t4 (z.B. 45 s nach dem Zeitpunkt t3) hat das Wasser W sicher seinen Siedepunkt erreicht, und die Heizung 7 wird ausgeschaltet.

In einem Schritt S5 wird nun innerhalb einer Messdauer von t4 bis t5 von z.B. 5 s bis 10 s eine Reihe einzelner Messwerte x gemessen und daraus ein Durchschnittsmesswert x_o bestimmt.

Folgend wird in einem Schritt S6 zumindest auf Basis des in Schritt S5 bestimmten Durchschnittsmesswerts x_o ein neuer Wassererkennungsmesswert x_thr = x_thr_new berechnet und in der Auswerteschaltung 13 eingestellt.

Der Wassererkennungsmesswert x_thr_new kann in einer Variante anhand einer Kennlinie oder einer Formel berechnet werden.

In einer anderen Variante wird in einem Schritt S5b nach Bestimmen des Durchschnittsmesswerts x_o (dann auch als oberer Messwert bezeichenbar) Wasser W aus dem Wasseraufnahmeraum 5 abgepumpt, bis ein tieferer Wert x = A · x_o unterschritten wird, wobei der Bruchteil A z.B. einen Wert im Bereich [0,1; 0,5] annehmen kann, z.B. von 0,2.

Folgend wird in einem Schritt S5c analog zu dem Durchschnittsmesswert x_o ein Durchschnittswert x_u (auch als unterer Messwert bezeichenbar) gemessen. Der Durchschnittswert x_u kann insbesondere einem Kriechstrom entsprechen.

In Schritt S6 wird der neue bzw. angepasste Wassererkennungsmesswert x_thr_new auf einen Wert zwischen x_u und x_o eingestellt.

Damit ist der Anpassungsablauf beendet.

Bei einem folgenden Dampferzeugungsbetrieb wird Wasser W erneut in den Verdampfer 4 eingepumpt, bis die Messwerte x des Füllstandssensors 11 den Wassererkennungsmesswert x_thr_new erreichen oder überschreiten. Dann wird die Heizung 7 eingeschaltet, um das Wasser W zum Sieden zu bringen, woraufhin verdampftes Wasser W durch die Dampfzuführung 8 in den Garraum 3 gelangt. Sinkt der Messwert x des Füllstandssensors 11 unter den Wassererkennungsmesswert x_thr_new, wird bei eingeschalteter Heizung 7 Wasser W nachgepumpt, bis der Wassererkennungsmesswert x_thr_new erneut erreicht oder überschritten wird, usw.

Wäre der Wassererkennungsmesswert x_thr während des Dampferzeugungsbetrieb auf einen für härteres Wasser vorgesehenen Wert eingestellt, könnte es vorkommen, dass bei Nutzung von sehr weichem Wasser W der Messwert x des Füllstandssensors 11 den Wassererkennungsmesswert x_thr niemals erreichen würde. Dann könnte z.B. ein Pumpentimeout-Fehler gemeldet werden und der Verdampfer 4 abgeschaltet werden.

Selbstverständlich ist die vorliegende Erfindung nicht auf das gezeigte Ausführungsbeispiel beschränkt.

So lässt sich durch Auswertung des Messwerts x des Füllstandssensors 11 auch feststellen, ob Entkalkungsmittel in dem Wasser W vorhanden ist.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Backofen
- 2: Garraumwandung
- 3: Garraum
- 4: Verdampfer
- 5: Wasseraufnahmeraum
- 6: Metallplatte / untere Messelektrode
- 7: Heizung
- 8: Dampfzuführung
- 9: Pumpe
- 10: Wassertank
- 11: Füllstandssensor
- 12: Obere Messelektrode
- 13: Auswerteschaltung
- 14: Steuereinrichtung
- S1-S6: Verfahrensschritte
- t: Zeit
- t1-t5: Zeitpunkte
- W: Wasser
- x: Messwert
- x_o: Durchschnittsmesswert / oberer Messwert
- x_thr: Wassererkennungsmesswert
- x_thr_min: Mindestwert
- x_thr_new: Neuer Wassererkennungsmesswert
- x_u: Durchschnittsmesswert / unterer Messwert

## Patentansprüche

1. Verfahren (S1-S6) zum Betreiben eines Haushalts-Dampfbehandlungsgeräts (1), aufweisend einen Verdampfer (4) mit einem heizbaren Wasseraufnahmeraum (5, 7) und einen Füllstandssensor (6, 11-13) mit mindestens zwei übereinander in dem Wasseraufnahmeraum (5) voneinander beabstandet angeordneten Messelektroden (6, 12), wobei
ein Wassererkennungsmesswert (x_thr), der dazu vorgesehen ist, eine Benetzung beider Messelektroden (6, 12) mit in den Wasseraufnahmeraum (5) eingefülltem Wasser (W) anzugeben, an eine elektrische Leitfähigkeit des in dem Wasseraufnahmeraum (W) befindlichen Wassers (W) angepasst wird, und wobei
während eines Anpassungsablaufs
(a) der Wassererkennungsmesswert (x_thr) auf einen vorgegebenen Mindestwert (x_thr_min) eingestellt wird (S1);
(b) der Wasseraufnahmeraum (5) mit Wasser (W) befüllt wird (S2), bis der Mindestwert (x_thr_min) erreicht oder überschritten ist (S3);
(c) das Wasser (W) in dem Wasseraufnahmeraum (W) zum Sieden gebracht wird (S4),
(d) mittels des Füllstandssensors (6, 11-13) ein zugehöriger Messwert (x_o) bestimmt wird (S5);
(e) der Wassererkennungsmesswert (x_thr) anhand des in Schritt (d) bestimmten Messwerts (x_o) angepasst wird (S6).

2. Verfahren (S1-S6) nach einem der vorhergehenden Ansprüche, bei dem in Schritt (d) der Messwert anhand einer Reihe innerhalb einer vorgegebenen Messdauer aufgenommenen Einzel-Messwerte bestimmt wird, insbesondere als Durchschnittswert der Einzel-Messwerte.

3. Verfahren (S1-S6) nach einem der vorhergehenden Ansprüche, bei dem Schritt (b) bei trockenem Verdampfer (4) durchgeführt wird (S2, S3).

4. Verfahren (S1-S6) nach einem der vorhergehenden Ansprüche, bei dem in Schritt (e) der Wassererkennungsmesswert (x_thr) über eine Formel oder eine Kennlinie, welche eine Beziehung zwischen dem in Schritt (d) bestimmten Messwert (x_o) und dem Wassererkennungsmesswert (x_thr, x_thr_new) bereitstellt, angepasst wird (S6).

5. Verfahren (S1-S6) nach Anspruch 4, bei dem in Schritt (e) der Wassererkennungsmesswert (x_thr) auf einen ersten, höheren Wert festgelegt wird, wenn der in Schritt (d) bestimmte Messwert (x_o) einen vorgegebenen Schwellwert überschreitet, ansonsten auf einen zweiten, niedrigeren Wert festgelegt wird (S6).

6. Verfahren (S1-S6) nach einem der vorhergehenden Ansprüche, bei dem nach Schritt (d) die Schritte durchgeführt werden, dass:
(d2) Wasser aus dem Wasseraufnahmeraum entfernt wird, bis mittels des Füllstandssensors (6, 11-13) ein vorgegebener Bruchteil des in Schritt (d) bestimmten Messwerts (x_o) unterschritten wird (S5b);
(d3) dann mittels des Füllstandssensors (6, 11-13) ein zugehöriger weiterer Messwert (x_u) bestimmt wird (S5c);
und der Wassererkennungsmesswert in Schritt (e) auf einen Wert zwischen dem in Schritt (d) gemessenen Messwert (x_o) und dem in Schritt (d3) gemessenen weiteren Messwert (x_u) eingestellt wird (S6).

7. Verfahren (S1-S6) nach einem der vorhergehenden Ansprüche, bei dem dann, wenn der in Schritt (d) bestimmte Messwert (x_o) einen vorgegebenen Schwellwert überschreitet, ein Vorhandensein von Entkalkungsmittel festgestellt wird.

8. Verfahren (S1-S6) nach Anspruch 7, bei dem der vorgegebene Schwellwert während eines Entkalkungsablaufs bestimmt wird und dann, wenn das Vorhandensein von Entkalkungsmittel festgestellt wird, mindestens ein Spülvorgang zum Spülen des Wasseraufnahmeraums (5) durchgeführt wird.

9. Verfahren (S1-S6) nach einem der vorhergehenden Ansprüche, bei dem mindestens eine eine Entkalkung betreffende Aktion ausgelöst wird, wenn ein zu einem Kriechstrom gehöriger Messwert einen vorgegebenen Schwellwert überschreitet.

10. Haushalts-Dampfbehandlungsgerät (1), insbesondere Dampfgargerät, aufweisend einen Verdampfer (4) mit einem heizbaren Wasseraufnahmeraum (5, 7) und einen Füllstandssensor (6, 11-13) mit zwei übereinander in dem Wasseraufnahmeraum (5) voneinander beabstandet angeordneten Messelektroden (6, 11), und ferner aufweisend eine Steuereinrichtung (14), wobei das Haushalts-Dampfbehandlungsgerät (1), insbesondere unter Nutzung der Steuereinrichtung (14), zur Durchführung des Verfahrens (S1-S6) nach einem der vorhergehenden Ansprüche ausgebildet ist.

## Claims

1. Method (S1-S6) for operating a household steam treatment appliance (1), having an evaporator (4) with a heatable water holding chamber (5, 7) and a fill level sensor (6, 11-13) with at least two measurement electrodes (6, 12), which are disposed one over the other at a distance from each other in the water holding chamber (5), wherein a water detection measured value (x_thr), which is provided for indicating wetting of both measurement electrodes (6, 12) with water (W) introduced into the water holding chamber (5), is adjusted to an electrical conductivity of the water (W) contained in the water holding chamber (W), and wherein during an adaptation process
(a) the water detection measured value (x_thr) is set at a predetermined minimum value (x_thr) (S1);
(b) the water holding chamber (5) is filled with water (W) (S2), until the minimum value (x_thr_min) is reached or exceeded (S3);
(c) the water (W) in the water holding chamber (5) is brought to boiling point (S4);
(d) by means of the fill level sensor (6, 11-13) an associated measured value (x_o) is determined (S5);
(e) the water detection measured value (x_thr) is adapted using the measured value (x_o) determined in step (d) (S6).

2. Method (S1-S6) according to one of the preceding claims, in which in step (d) the measured value is determined, particularly as an average value of the individual measured values, using a range of individual measured values recorded within a particular measurement period.

3. Method (S1-S6) according to one of the preceding claims, in which step (b) is carried out (S2, S3) with a dry evaporator (4).

4. Method (S1-S6) according to one of the preceding claims, in which in step (e) the water detection measured value (x_thr) is adapted via a formula or a characteristic curve, which provides a link between the measured value (x_o) determined in step (d) and the water detection measured value (x_thr, x_thr_new) (S6).

5. Method (S1-S6) according to claim 4, in which in step (e) the water detection measured value (x_thr) is set at a first, higher value, if the measured value (x_o) determined in step (d) exceeds a predetermined threshold, or otherwise at a second, lower value (S6).

6. Method (S1-S6) according to one of the preceding claims, in which after step (d) the steps are carried out such that:
(d2) water is removed from the water holding chamber, until by means of the fill level sensor (6, 11-13) a predetermined fraction of the measured value (x_o) determined in step (d) is fallen below (S5b);
(d3) then by means of the fill level sensor (6, 11-13) an associated further measured value (x_u) is determined (S5c);
and the water detection measured value is set in step (e) to a value between the measured value (x_o) measured in step (d) and the further measured value (x_u) measured in step (d3) (S6).

7. Method (S1-S6) according to one of the preceding claims, in which if the measured value (x_o) determined in step (d) exceeds a predetermined threshold, the presence of a descaling agent is established.

8. Method (S1-S6) according to claim 7, in which the predetermined threshold is determined during a separate descaling process and then, if the presence of descaling agent is established, at least one rinsing operation is carried out to rinse the water holding chamber (5).

9. Method (S1-S6) according to one of the preceding claims, in which at least one action relating to a descaling is triggered, if a measured value associated with a leakage current exceeds a predetermined threshold.

10. Household steam-treatment appliance (1), particularly a steam cooking appliance, having an evaporator (4) with a heatable water holding chamber (5, 7) and a fill level sensor (6, 11-13) with two measurement electrodes (6, 11), which are disposed one over the other at a distance from each other in the water holding chamber (5), and also having a control device (14), wherein the household steam treatment appliance (1) is embodied to carry out the method (S1-S6) according to one of the preceding claims, in particular using the control device (14).

## Revendications

1. Procédé (S1-S6) pour faire fonctionner un appareil ménager de traitement à la vapeur (1), qui comprend un évaporateur (4) comprenant un espace de réception d'eau (5, 7) pouvant être chauffé et un capteur de niveau de remplissage (6, 11-13) comprenant au moins deux électrodes de mesure (6, 12) disposées l'une au-dessus de l'autre à distance l'une de l'autre dans l'espace de réception d'eau (5),
dans lequel une valeur de mesure de détection d'eau (x_thr), qui sert à indiquer une imprégnation des deux électrodes de mesure (6, 12) avec de l'eau (W) introduite dans l'espace de réception d'eau (5) est adaptée en fonction d'une conductivité électrique de l'eau (W) contenue dans l'espace de réception d'eau (W), et
dans lequel, au cours d'un processus d'adaptation,
(a) la valeur de mesure de détection d'eau (x_thr) est réglée (S1) sur une valeur minimale prédéterminée (x_thr_min),
(b) l'espace de réception d'eau (5) est rempli (S2) avec de l'eau (W), jusqu'à ce que la valeur minimale (x_thr_min) soit atteinte ou dépassée (S3),
(c) l'eau (W) est portée à ébullition (S4) dans l'espace de réception d'eau (W),
(d) une valeur de mesure correspondante (x_o) est déterminée (S5) au moyen du capteur de niveau de remplissage (6, 11-13),
(e) la valeur de mesure de détection d'eau (x_thr) est adaptée (S6) en fonction de la valeur de mesure (x_o) déterminée à l'étape (d).

2. Procédé (S1-S6) selon l'une des revendications précédentes, dans lequel, dans l'étape (d), la valeur de mesure est déterminée sur la base d'une série de mesures individuelles enregistrées durant une période de mesure prédéterminée, en particulier sous la forme d'une moyenne des valeurs des mesures individuelles.

3. Procédé (S1-S6) selon l'une des revendications précédentes, dans lequel l'étape (b) est exécutée (S2, S3) lorsque l'évaporateur (4) est sec.

4. Procédé (S1-S6) selon l'une des revendications précédentes, dans lequel, dans l'étape (e), la valeur de mesure de détection d'eau (x_thr) est adaptée (S6) au moyen d'une formule ou d'une courbe caractéristique, qui établit une relation entre la valeur de mesure (x_o) déterminée dans l'étape (d) et la valeur de mesure de détection d'eau (x_thr, x_thr_new).

5. Procédé (S1-S6) selon la revendication 4, dans lequel, dans l'étape (e), la valeur de mesure de détection d'eau (x_thr) est fixée à une première valeur supérieure lorsque la valeur de mesure (x_o) déterminée à l'étape (d) est supérieure à une valeur seuil prédéterminée, et sinon, elle est fixée (S6) à une deuxième valeur inférieure.

6. Procédé (S1-S6) selon l'une des revendications précédentes, dans lequel, après l'étape (d), les étapes suivantes sont exécutées :
(d2) de l'eau est enlevée de l'espace de réception d'eau, jusqu'à ce que la valeur mesurée au moyen du capteur de niveau de remplissage (6, 11-13) devienne inférieure (S5b) à une fraction prédéterminée de la valeur de mesure (x_o) déterminée dans l'étape (d),
(d3) puis, une valeur supplémentaire correspondante (x_u) est déterminée (S5c) au moyen du capteur de niveau de remplissage (6, 11-13),
et la valeur de mesure de détection d'eau dans l'étape (e) est réglée (S6) à une valeur comprise entre la valeur de mesure (x_o) mesurée dans l'étape (d) et la valeur de mesure supplémentaire (x_u) mesurée dans l'étape (d3).

7. Procédé (S1-S6) selon l'une des revendications précédentes, dans lequel la présence d'un agent détartrant est détectée lorsque la valeur de mesure (x_o) déterminée dans l'étape (d) est supérieure à une valeur seuil prédéterminée.

8. Procédé (S1-S6) selon la revendication 7, dans lequel la valeur seuil prédéterminée est déterminée durant un cycle de détartrage, et lorsque la présence d'un agent détartrant est détectée, au moins une opération de rinçage est effectuée afin de rincer l'espace de réception d'eau (5).

9. Procédé (S1-S6) selon l'une des revendications précédentes, dans lequel au moins une action concernant un détartrage est déclenchée lorsqu'une valeur de mesure se rapportant à un courant de fuite est supérieure à une valeur seuil prédéterminée.

10. Appareil ménager de traitement à la vapeur (1), en particulier appareil de cuisson à la vapeur, comprenant un évaporateur (4) comportant un espace de réception d'eau (5, 7) pouvant être chauffé et un capteur de niveau de remplissage (6, 11-13) comportant au moins deux électrodes de mesure (6, 11) disposées l'une au-dessus de l'autre à distance l'une de l'autre dans l'espace de réception d'eau (5), et comprenant en outre un dispositif de commande (14), l'appareil ménager de traitement à la vapeur (1), étant configuré pour exécuter le procédé (S1-S6) selon l'une des revendications précédentes, en particulier au moyen du dispositif de commande (14).
